# EUROPÄISCHE PATENTSCHRIFT

(11) **EP 0 895 369 B1**
(45) Veröffentlichungstag und Bekanntmachung des Hinweises auf die Patenterteilung: **22.06.2005**
(21) Anmeldenummer: 98112695.6
(22) Anmeldetag: 09.07.1998
(51) Int. Cl.: H04B 10/18

(54) **Verfahren und optisches Überttragungssystem zur Kompensation von Dispersion in optischen Übertragungsstrecken**
Method and optical transmission system for dispersion compensation in optical transmission lines
Méthode et système de transmission optique pour compensation de la dispersion de lignes de transmission optiques

(30) Priorität: 29.07.1997 DE 19732568
(43) Veröffentlichungstag der Anmeldung: 03.02.1999
(73) Patentinhaber: Lucent Technologies Network Systems GmbH, 90411 Nürnberg (DE)
(72) Erfinder: Schmauss, Bernhard, Dipl.-Ing., 92637 Theisseil (DE); Schinabeck, Alfons, Dipl.-Ing., 91077 Hetzles (DE); Berger, Matthias, Dipl.-Ing., 90559 Burgthann (DE); Werner, Dieter, Dipl.-Ing, 91058 Erlangen (DE)
(74) Vertreter: Watts, Christopher Malcolm Kelway, Dr.

(56) Entgegenhaltungen:
- EP-A- 0 730 354
- US-A- 5 574 590
- MARHIC M E ET AL: "OPTIMIZING THE LOCATION OF DISPERSION COMPENSATORS IN PERIODICALLY AMPLIFIED FIBER LINKS IN THE PRESENCE OF THIRD-ORDER NONLINEAR EFFECTS" IEEE PHOTONICS TECHNOLOGY LETTERS, IEEE INC. NEW YORK, US, Bd. 8, Nr. 1, 1996, Seiten 145-147, XP000547561 ISSN: 1041-1135

## Beschreibung

Die Erfindung bezieht sich auf ein Verfahren und ein optisches Übertragungssystem zur Kompensation von Dispersion in optischen Übertragungsstrecken, bei denen Dispersionskompensationsfasern eingesetzt werden, wobei die Dispersionskompensationsfasern sowohl am Anfang als auch am Ende der die Streckenabschnitte der Übertragungsstrecke bildenden optischen Fasern angeordnet sind.

Die für optische Übertragungssysteme verwendeten Standard Single Mode Fasern (SSMF) zeigen bei einer Wellenlänge von ca. 1550 nm eine Dispersion (Group Velocity Dispersion: GVD) von etwa 17 ps/(nm•km). Besonders bei hohen Bitraten und langen Übertragungsstrecken führt die Dispersion zu Signalverzerrungen am Ende der Übertragungsstrecke. In der Vergangenheit sind verschiedene Methoden zur Kompensation der Dispersion entwickelt worden. Derzeit werden zur Kompensation der Dispersion vornehmlich spezielle Fasern, sogenannte Dispersionskompensationsfasern (DCF) eingesetzt, die eine negative Dispersion aufweisen. Die Dispersion der DCF ist üblicherweise betragsmäßig größer als die Dispersion der SSMF, so daß Faserlängen der DCF zur Kompensation ausreichend sind, die wesentlich kürzer als die Übertragungsstrecke sind. Ein gebräuchlicher Wert für die Dispersion einer DCF ist beispielsweise -100 ps/(nm•km). Mit diesen Fasern ist es möglich, die Dispersion für eine bestimmte Wellenlänge exakt zu kompensieren, falls die Ausbreitung des Signals in der Faser nicht zusätzlich durch nichtlineare Effekte beeinflußt wird. Lange Streckenabschnitte bedingen aber große optische Signalleistungen, die unweigerlich nichtlineare Effekte hervorrufen.

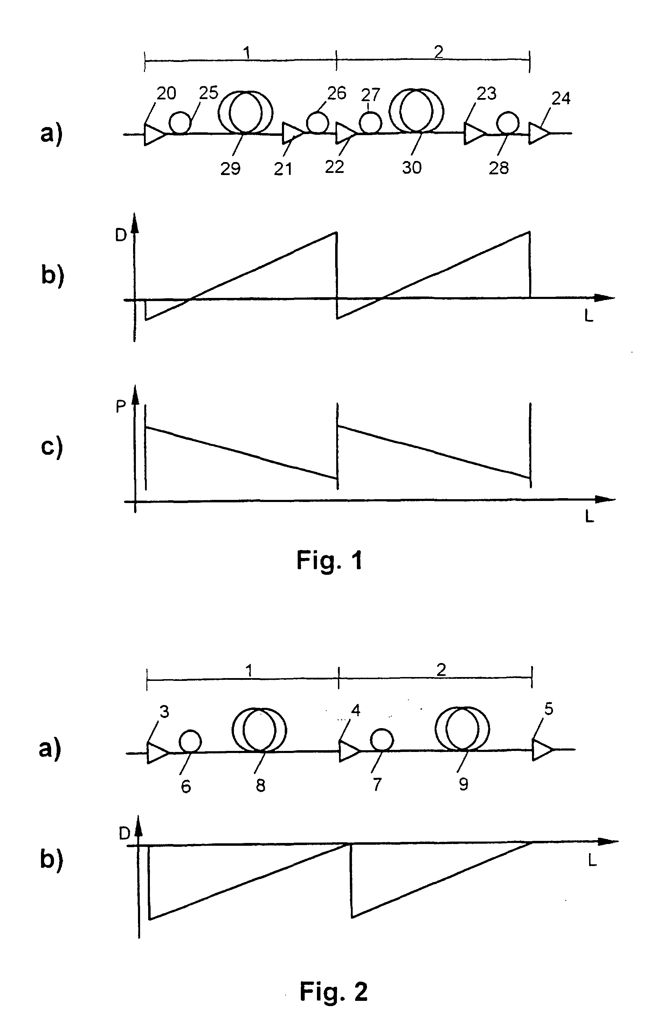

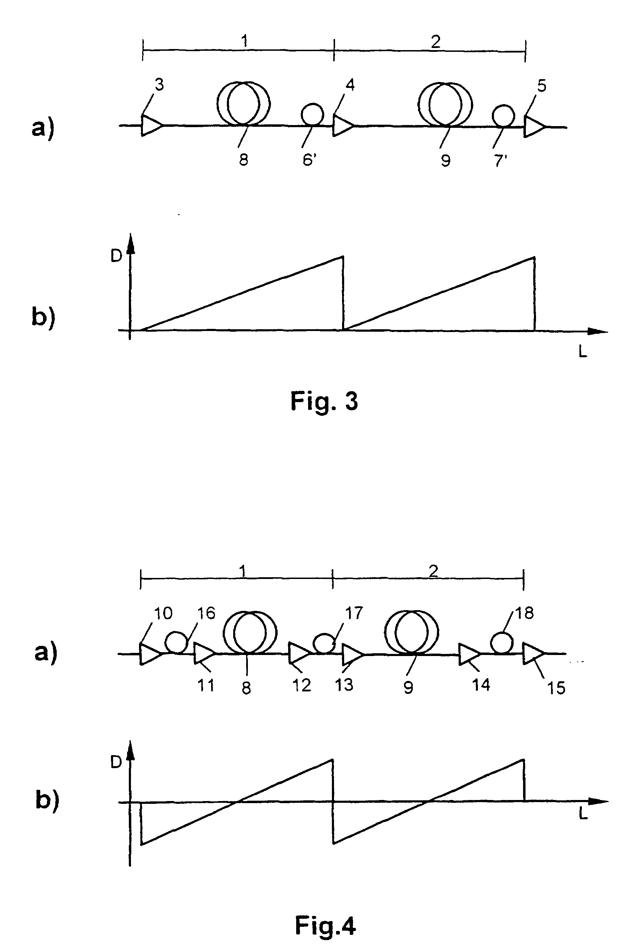

Als gebräuchlichste Methoden zur Kompensation der Dispersion sind die sogenannte Vor- und Nachkompensation bekannt geworden. Sie unterscheiden sich hinsichtlich der Lage der DCF bezogen auf die für den Streckenabschnitt verwendete SSMF und sind zum besseren Verständnis in den Fig. 2 und 3 dargestellt.

Fig. 2a zeigt die Vorkompensation, bei der die DCF vor der SSMF liegt. Es ist ein Übertragungssystem mit zwei Streckenabschnitten 1 und 2 dargestellt. Streckenabschnitt 1 weist einen Streckenverstärker 3, eine DCF 6 und eine den eigentlichen Streckenabschnitt 1 bildende SSMF 8 auf. Auch der zweite Streckenabschnitt 2 weist einen Streckenverstärker 4, eine DCF 7 und eine SSMF 9 auf. Schließlich ist ein Verstärker 5 vorhanden, der das übertragene Signal am Ende des Übertragungssystems zur weiteren Verarbeitung verstärkt. Am Anfang eines jeden Streckenabschnitts 1 und 2 wird bei der Vorkompensation demnach die DCF 6 und 7 so bemessen, daß die akkumulierte Dispersion einen Wert erreicht, der betragsmäßig der über die Länge der SSMF 8 bzw. 9 akkumulierten Dispersion entspricht, wodurch am Ende der SSMF 8 bzw. 9 ein Wert für die akkumulierte Dispersion erreicht wird, der idealerweise bei null liegt. Die sich über die Länge der Übertragungsstrecke ergebende akkumulierte Dispersion ist in Figur 2b dargestellt. Zu Beginn des Streckenabschnitts 1 wird durch die DCF 6 eine negative akkumulierte Dispersion vorgegeben, die betragsmäßig die positive akkumulierte Dispersion der SSMF 8 genau ausgleicht. Am Ende des Streckenabschnitts 1 liegt die akkumulierte Dispersion deshalb bei null. Entsprechendes gilt für Streckenabschnitt 2.

Fig. 3a zeigt die Nachkompensation, bei der die SSMF vor der DCF liegt. Es ist ein Übertragungssystem mit zwei Streckenabschnitten 1 und 2 dargestellt. Streckenabschnitt 1 weist einen Streckenverstärker 3, eine den eigentlichen Streckenabschnitt 1 bildende SSMF 8 auf und eine DCF 6'. Auch der zweite Streckenabschnitt 2 weist einen Streckenverstärker 4, eine SSMF 9 und eine DCF 7' auf. Schließlich ist ein Verstärker 5 vorhanden, der das übertragene Signal am Ende des Übertragungssystems zur weiteren Verarbeitung verstärkt. Am Ende der Streckenabschnitte 1 und 2 ist die DCF 6' und 7' so bemessen, daß der Wert der akkumulierten Dispersion betragsmäßig der in der SSMF 8 bzw. 9 akkumulierten Dispersion entspricht, wodurch für den jeweiligen Streckenabschnitt ein Wert für die akkumulierte Dispersion erreicht wird, der idealerweise bei null liegt. Figur 3b stellt die sich über die Länge der Übertragungsstrecke ergebende akkumulierte Dispersion dar. Über die SSMF 8 des Streckenabschnitts 1 wird eine positive Dispersion akkumuliert und durch die negative akkumulierte Dispersion der DCF 6' vollständig ausgeglichen, so daß die akkumulierte Dispersion am Ende des Streckenabschnitts 1 null ist. Entsprechendes gilt für Streckenabschnitt 2.

Aus den Figuren 2 und 3 ist ersichtlich, daß bei der Vorkompensation die DCF 6 bzw. 7, bei der Nachkompensation die SSMF 8 bzw. 9 durch die Streckenverstärker 3 bzw. 4 mit einer großen optischen Leistung beaufschlagt werden, die wegen der Verluste in den zusätzlich verwendeten Kompensationsfasern noch erhöht werden muß. Dies hat - wie eingangs erwähnt - besondere Bedeutung hinsichtlich nichtlinearer Effekte (self phase modulation, cross phase modulation, four wave mixing) die eine Verzerrung des zu übertragenden Signals bewirken. In diesem Zusammenhang ist die Selbstphasenmodulation (SPM) von besonderer Bedeutung, die eine Frequenzverschiebung an den Pulsflanken des zu übertragenden Signals bewirkt und damit eine zusätzliche Beeinflussung des Signals durch die Dispersion in der Faser nach sich zieht. Zusätzliche Probleme treten auf, wenn die bekannten optischen Übertragungssysteme zur Übertragung mehrerer, auf verschiedenen Wellenlängen übertragenen Signalen (wavelength division multiplexing, WDM) verwendet wird, insbesondere wenn es zu Schwankungen der Signalleistung kommt, beispielsweise weil das WDM-System eine veränderbare Kanalzahl bei konstanter optischer Gesamtleistung ermöglicht.

Aus der Offenlegungsschrift EP 0 730 354 A2 ist eine Dispersionskompensation für optische Übertragungsstrecken bekannt, welche den Einfluß nichtlinearer Effekte reduziert. Dies wird durch eine Kompensation erreicht, die eine Kombination aus Vor- und Nachkompensation darstellt. Die bekannte Dispersionskompensation ist in Fig. 4a dargestellt. Die dargestellte Übertragungsstrecke mit zwei Streckenabschnitten 1 und 2 weist sechs Verstärker 10 bis 15, drei DCFs 16 bis 18 und zwei die eigentlichen Streckenabschnitte bildenden SSMFs 8 und 9 auf. Bei der Verwendung gleicher Fasern für die DCFs 16 bis 18 weisen die DCFs 16 und 18 dabei die halbe Länge der DCF 17 auf. Die Länge wird in der gleichen Weise bestimmt, wie für den Fall der oben beschriebenen Vor- bzw. Nachkompensation. Die Verstärker 10 bis 15 sind dabei jeweils zwischen DCF und SSMF bzw. SSMF und DCF angeordnet.

Bei der bekannten Kompensation wird - wie in Figur 4b dargestellt - erreicht, daß die sich insgesamt ergebende akkumulierte Dispersion der Übertragungsstrecke null ist. Durch die DCF 16 wird eine negative akkumulierte Dispersion vorgegeben, die betragsmäßig der halben positiven akkumulierten Dispersion der SSMF 8 entspricht. Am Ende der SSMF 8 hat die akkumulierte Dispersion somit den halben Wert der ausschließlich in der SSMF 8 akkumulierten Dispersion. Mittels der DCF 17 wird erneut eine negative akkumulierte Dispersion erzeugt, die die akkumulierte Dispersion und die Dispersion der Hälfte der SSMF 9 ausgleicht, wodurch eine negative Dispersion aufläuft, die betragsmäßig der halben sich innerhalb der SSMF 9 akkumulierenden Dispersion entspricht. Am Ende der Übertragungsstrecke wird die akkumulierte Dispersion schließlich von der DCF 18 vollständig kompensiert. Da die maximal auftretende akkumulierte Dispersion betragsmäßig höchstens den halben Wert einnimmt, wie er sich bei der Vor- oder Nachkompensation ergibt, werden die nichtlinearen Signalverzerrungen insgesamt verringert.

Die aus dem genannten Stand der Technik bekannte Dispersionskompensation weist jedoch den Nachteil auf, daß die Streckenverstärker 11 und 13, die wegen der möglichst großen Länge der SSMF 8 und 9, eine große Ausgangsleistung haben, das zu übertragende Signal an der Stelle verstärken, an der jeweils die betragsmäßig größte akkumulierte Dispersion vorliegt, nämlich betragsmäßig die Hälfte der Dispersion der den Streckenabschnitt bildenden SSMF. Außerdem weist die bekannte optische Übertragungsstrecke den Nachteil auf, daß vor jeder der verwendeten Fasern, also sowohl den DCFs als auch den SSMFs, ein Verstärker benötigt wird.

Der Erfindung liegt deshalb die Aufgabe zugrunde, ein Verfahren und ein optisches Übertragungssystem zur Kompensation von Dispersion in optischen Übertragungsstrecken, bei denen Dispersionskompensationsfasern eingesetzt werden, wobei die Dispersionskompensationsfasern sowohl am Anfang als auch am Ende der die Streckenabschnitte bildenden optischen Fasern angeordnet sind, anzugeben, welche gegenüber dem Stand der Technik die negativen Einflüsse nichtlinearer Effekte weiter reduzieren und gleichzeitig einen einfacheren Aufbau des optischen Übertragungssystems ermöglichen.

Hinsichtlich des optischen Übertragungssystems wird diese Aufgabe durch die Merkmale des Anspruchs 1 gelöst.

Hinsichtlich des Verfahrens zur Kompensation von Dispersion wird diese Aufgabe durch die Merkmale des Anspruchs 8 gelöst.

Gemäß der Erfindung enthält das optische Übertragungssystem für jeden Streckenabschnitt Dispersionskompensationsfasern, die am Anfang und am Ende der den Streckenabschnitt bildenden optischen Faser angeordnet sind, deren gesamte akkumulierte Dispersion betragsmäßig der akkumulieten Dispersion der den Streckenabschnitt bildenden optischen Faser entspricht, wobei die Dispersionskompensationsfaser am Anfang der Übertragungsstrecke direkt mit der optischen Faser verbunden ist und eine akkumulierte Dispersion aufweist, die betragsmäßig kleiner als die Hälfte der akkumulierten Dispersion der den Streckenabschnitt bildenden optischen Faser ist.

Die Erfindung geht dabei von der Überlegung aus, daß eine Begrenzung der nichtlinearen Effekte erreicht werden kann, wenn in Bereichen mit großer Signalleistung eine möglichst geringe akkumulierte Dispersion vorliegt. Dies kann dann erreicht werden, wenn am Anfang jeder Übertragungsstrecke bzw. jeden Streckenabschnitts, wo die Einkoppelung der größten Signalleistung erfolgt, die akkumulierte Dispersion so gering wie möglich gehalten wird. Dazu wird die Dispersionskompensationsfaser in zwei ungleiche Teile aufgeteilt und am Anfang und Ende der den Streckeabschnitt bildenden optischen Faser angeordnet, wobei der am Anfang angeordnete Teil eine betragsmäßig kleinere akkumulierte Dispersion aufweist als der am Ende der optischen Faser angeordnete Teil. Auf diese Weise werden die Nichtlinearitäten auf den ersten Teil der Dispersionskompensationsfaser und auf den Anfang der mit ihr direkt verbundenen optischen Faser verteilt und wegen der unterschiedlichen Vorzeichen der Dispersion von optischer Faser und Dispersionskompensationsfaser ergibt sich für den Bereich der Fasern in denen die Signalleistung groß ist nur eine geringe akkumulierte Dispersion.

Der Vorteil der Erfindung liegt insbesondere darin, daß durch die Verringerung der akkumulierten Dispersion im Bereich großer Signalleistung die Wirkung der nichtlinearen Effekte stark reduziert wird, und daß die beschriebene Dispersionskompensation einen einfacheren Aufbau der Übertragungsstrecke ermöglicht, weil Signalverstärker eingespart werden können.

Weitere Vorteile der Erfindung ergeben sich aus den abhängigen Ansprüchen und der nachfolgenden Beschreibung der Erfindung anhand von Figuren.

Es zeigen:
- Fig. 1: eine erfindungsgemäße optische Übertragungsstrecke sowie die sich ergebende akkumulierte Dispersion und Signalleistung,
- Fig. 2: eine bekannte optische Übertragungsstrecke mit Vorkompensation sowie die sich ergebende akkumulierte Dispersion,
- Fig. 3: eine bekannte optische Übertragungsstrecke mit Nachkompensation sowie die sich ergebende akkumulierte Dispersion, und
- Fig. 4: eine bekannte optische Übertragungsstrecke mit aufgeteilter Kompensation sowie die sich ergebende akkumulierte Dispersion.
Die Figuren stellen nur die für das Verständnis der vorliegenden Erfindung notwendigen Bestandteile der optischen Übertragungssysteme dar. Insbesondere fehlen die in einem Übertragungssystem zur Signalverarbeitung benötigten Bestandteile wie Sender oder Empfänger am Anfang oder Ende der Übertragungsstrecken und für die Verbindung der einzelnen Fasern benötigten Bestandteile.

Einander entsprechende Teile sind in den Figuren mit gleichen Bezugszeichen gekennzeichnet.

Fig. 1a zeigt ein optisches Übertragungssystem mit Streckenabschnitten 1 und 2. Der erste Streckenabschnitt 1 wird von einem Streckenverstärker 20, zur Verstärkung des zu übertragenden optischen Signals, einer ersten Dispersionskompensationsfaser (DCF) 25, einer den eigentlichen Streckenabschnitt 1 bildenden optischen Faser (SSMF) 29, einem Verstärker 21 und einer zweiten DCF 26 gebildet. Der zweite Streckenabschnitt 2 wird von einem Streckenverstärker 22, einer ersten DCF 27, einer den eigentlichen Streckenabschnitt 2 bildenden SSMF 30, einem Verstärker 23 und einer zweiten DCF 28 gebildet. Der weiter dargestellte Verstärker 24 dient zur Verstärkung des übertragenen optischen Signals für die weitere Verarbeitung.

Ausgehend von der Erkenntnis, daß Nichtlinearitäten nur bei einer geringen akkumulierten Dispersion wirksam werden sollen, ist eine Betrachtung der im jeweiligen Streckenabschnitt 1 und 2 auftretenden Signalleistung nötig. Die Signalleistung ist unmittelbar nach dem Streckenverstärker 20 am größten. Die Signalleistung nimmt bei der Ausbreitung des Signals in der DCF 25 und der SSMF 29, wegen der Dämpfungseigenschaften der Fasern 25 und 29, ab. Da die Nichtlinearitäten nur bis zu einer gewissen Signalleistung wirksam werden, ergibt sich aus den Eigenschaften der verwendeten Fasern die Länge und damit die akkumulierte Dispersion am Ende der DCF 25. Die Länge der DCF 25 wird so festgelegt, daß die nichtlinearen Effekte sowohl in der DCF 25 als auch in der SSMF 29 auftreten. Die akkumulierte Dispersion ist in Figur 1b dargestellt, die optische Signalleistung in Figur 1c. Wie aus der Darstellung deutlich wird, ergibt sich wegen des entgegengesetzten Vorzeichens der Dispersion von DCF 25 (negative Dispersion) und SSMF 29 (positive Dispersion) insgesamt eine geringe akkumulierte Dispersion im Bereich hoher Signalleistung und somit eine verringerte Wirkung der nichtlinearen Effekte. Somit wird es insgesamt möglich, die Ausgangsleistung des Streckenverstärkers 20 zu erhöhen, wodurch die Verluste in der DCF 25 ausgeglichen werden können, längere Streckenabschnitte ermöglicht werden, und zum Stand der Technik zusätzliche Verstärker (s. Fig. 4a, 11, 13) eingespart werden können. Bei ausreichendem Signalrauschabstand können sogar die Verstärker 21 bzw. 23 entfallen, sollen sie jedoch zur Verbesserung des Signalrauschabstands eingesetzt werden, ist ihre Ausgangsleistung so zu bemessen, daß in der nachgeschalteten DCF 26 bzw. 28 keine nichtlinearen Effekte auftreten können. Entsprechend der Ausführungen für den Streckenabschnitt 1 ist der Streckenabschnitt 2 in analoger Weise aufgebaut.

In der oben beschriebenen Weise werden Werte für die akkumulierte Dispersion der DCF 25 bzw. 27 ermittelt, die betragsmäßig kleiner als die Hälfte des Wertes der akkumulierten Dispersion der SSMF 29 bzw. 30 sind. Die Werte für die akkumulierte Dispersion der DCF 26 bzw. 28 sind derart festzulegen, daß sie zusammen mit den akkumulierten Werten der DCF 25 bzw. 27 betragsmäßig jeweils dem Wert der akkumulierten Dispersion der SSMF 29 bzw. 30 entsprechen. Dadurch zeigen die Streckenabschnittel und 2 und somit die gesamte Übertragungsstrecke an ihrem Ende keine Restdispersion, weshalb sie im linearen Ausbreitungsfall ideal kompensiert sind.

Für einen Versuchsaufbau eines optischen Übertragungssystems zur Übertragung von Signalen mit einer Datenrate von 10 Gbit/s mit zwei Streckenabschnitten 1 und 2 von jeweils 100 km Länge, wurde bei einer akkumulierten Dispersion der Streckenabschnitte 1 und 2 von jeweils 1700 ps/nm eine akkumulierte Dispersion von -280 ps/nm für die erste DCF 25 bzw. 27 ermittelt. Entsprechend ergibt sich für die zweite DCF 26 bzw. 28 ein Wert von -1420 ps/nm. Zur Vermeidung von nichtlinaren Effekten in der zweiten DCF 26 bzw. 28 wurde für die Verstärker 21 bzw. 23 eine Ausgangsleistung von 0 dBm verwendet. Bei einer Variation der Ausgangsleistung der Streckenverstärker 20 bzw. 22 von +10 bis +14,5 dBm war eine zunehmende Verbesserung der Empfindlichkeit am Ende der Übertragungsstrecke zu beobachten. Eine Limitierung der Übertragungsqualität durch nichtlineare Effekte tritt also selbst bei den genannten hohen Signalleistungen noch nicht auf. Bei einem Aufbau entsprechend Figur 2 bzw. 3 war über +10 dBm bzw. +8 dBm eine Verschlechterung der Empfindlichkeit zu beobachten.

Da die akkumulierte Dispersion am Ende eines jeden Streckenabschnitts null ist, kann das optische Signal am Ende eines jeden Streckenabschnitts verarbeitet werden, weshalb sich das beschriebene Dispersionskompenationskonzept sowohl für Punkt zu Punkt Verbindungen als auch für optische Netze eignet.

In dem dargestellten optischen Übertragungssystem mit den Streckenabschnitten 1 und 2 ist der Aufbau für beide Streckenabschnitte 1 und 2 gleich. Insbesondere weisen die Streckenabschnitte 1 und 2 gleiche Länge auf, ein davon abweichender Aufbau ist möglich, beispielsweise können unterschiedliche Längen oder mehr bzw. weniger als zwei Streckenabschnitte vorhanden sein. Ein einfacher Aufbau der Übertragungsstrecken bzw. eine Nachrüstung existierender Übertragungssysteme ist möglich, falls die Verstärker 21 und 22 sowie die Dispersionskompensationsfasern 26 und 27 an einem gemeinsamen Ort angebracht werden.

Als Verstärker 20 bis 24 sind besonders sogenannte Erbium dotierte Faserverstärker (EDFA) geeignet, da diese eine direkte optische Verstärkung ermöglichen. Dies ist insbesondere bei WDM-Systemen vorteilhaft.

Weiterhin ist es für WDM-Systeme mit wählbarer Kanalzahl und fester optischer Gesamtleistung vorteilhaft, daß das beschriebene optische Übertragungssystem hinsichtlich auftretender Leistungsschwankungen unempfindlich ist. Diese Unempfindlichkeit rührt von der Begrenzung hoher Leistungen auf den Bereich geringer akkumulierter Dispersion her.

Neben der oben beschriebenen Kompensation der Dispersion der optischen Fasern mittels Dispersionskompensationsfasern ist es auch möglich, die Kompensation durch ein Fasergitter zu bewirken. Für diesen Fall sind - wie oben beschrieben - ebenfalls zwei Fasergitter vorzusehen, wobei darauf geachtet werden muß, daß große optische Signalleistungen nur an Stellen geringer akkumulierter Dispersion auftreten können.

## Patentansprüche

1. Optisches Übertragungssystem mit einem oder mehreren Streckenabschnitten (1;2) mit Dispersionskompensationsfasern (25, 26; 27, 28), bei dem eine erste Dispersionskompensationsfaser (25;27) am Anfang und eine zweite Dispersionskompensationsfaser (26; 28) am Ende eines jeden Streckenabschnitts angeordnet ist, wobei die gesamte akkumulierte Dispersion von erster (25; 27) und zweiter (26; 28) Dispersionskompensationsfaser eines Streckenabschnitts (1; 2) betragsmäßig der akkumulierten Dispersion einer den Streckenabschnitt (1; 2) bildenden optischen Faser (29; 30) entspricht,
**dadurch gekennzeichnet,**
**daß** die akkumulierte Dispersion der am Anfang der optischen Faser (29; 30) eines jeden Streckenabschnitts (1; 2) angebrachten ersten Dispersionskompensationsfaser (25; 27) betragsmäßig kleiner als die akkumulierte Dispersion der am Ende angebrachten zweiten Dispersionskompensationsfaser (26; 28) ist, und daß die am Anfang eines jeden Streckenabschnitts (1; 2) angebrachte erste Dispersionskompensationsfaser (25; 27) direkt mit der optischen Faser (29;30) des Streckenabschnitts (1; 2) verbunden ist.

2. Optisches Übertragungssystem nach Anspruch 1,
**dadurch gekennzeichnet,**
**daß** zwischen der am Ende eines jeden Streckenabschnitts (1; 2) angebrachten zweiten Dispersionskompensationsfaser (26; 28) und der den Streckenabschnitt (1; 2) bildenden optischen Faser (29; 30) ein Signalverstärker (21; 23) vorgesehen ist.

3. Optisches Übertragungssystem nach Anspruch 1 oder 2,
**dadurch gekennzeichnet,**
**daß** das optische Übertragungssystem von einkanaligen Übertragungsstrecken gebildet wird.

4. Optisches Übertragungssystem nach Anspruch 1 oder 2,
**dadurch gekennzeichnet,**
**daß** das optische Übertragungssystem von mehrkanaligen Übertragungsstrecken gebildet wird.

5. Optisches Übertragungssystem nach einem der Ansprüche 1 bis 4,
**dadurch gekennzeichnet,**
**daß** das optische Übertragungssystem Punkt zu Punkt Verbindungen bildet.

6. Optisches Übertragungssystem nach einem der Ansprüche 1 bis 4,
**dadurch gekennzeichnet,**
**daß** das optische Übertragungssystem in optischen Netzen verwendet wird.

7. Optisches Übertragungssystem nach einem der Ansprüche 1 bis 6,
**dadurch gekennzeichnet,**
**daß** anstelle von Dispersionskompensationsfasern (20, 26; 27, 28) Fasergitter vorgesehen sind.

8. Verfahren zur Kompensation von Dispersion in optischen Übertragungsstrecken, die aus einem oder mehreren von optischen Fasern gebildeten Streckenabschnitten bestehen, bei dem Dispersionskompensationsfasern eingesetzt werden, wobei eine erste Dispersionskompensationsfaser am Anfang und eine zweite Dispersionskompensationsfaser am Ende eines jeden Streckenabschnitts angeordnet wird und die gesamte akkumulierte Dispersion der ersten und zweiten Dispersionskompensationsfaser die in jedem Streckenabschnitt auftretende akkumulierte Dispersion der optischen Faser ausgleicht,
**dadurch gekennzeichnet,**
**daß** die akkumulierte Dispersion der ersten Dispersionskompensationsfaser derart festgelegt wird, daß sie betragsmäßig kleiner als die akkumulierte Dispersion der zweiten Dispersionskompensationsfaser ist, wobei die Aufteilung zwischen erster und zweiter Dispersionskompensationsfaser derart vorgenommen wird, daß hohe optische Leistungen auf Bereiche geringer akkumulierter Dispersion begrenzt sind, und daß die erste Dispersionskompensationsfaser direkt mit der optischen Faser des Streckenabschnitts verbunden wird.

9. Verfahren nach Anspruch 8,
**dadurch gekennzeichnet,**
**daß** anstelle von Dispersionskompensationsfasern (25, 26; 27, 28) Fasergitter verwendet werden.

## Claims

1. Optical transmission system having one or more path sections (1; 2) with dispersion compensation fibres (25, 26; 27, 28), in which a first dispersion compensation fibre (25; 27) is arranged at the start of each path section and a second dispersion compensation fibre (26; 28) is arranged at the end of each path section, with the magnitude of the total accumulated dispersion of the first (25; 27) and of the second (26; 28) dispersion compensation fibres in a path section (1; 2) corresponding to the accumulated dispersion of an optical fibre (29; 30) which forms the path section (1; 2), **characterized in that** the magnitude of the accumulated dispersion of the first dispersion compensation fibres (25; 27) which are fitted to the start of the optical fibres (29; 30) in each path section (1; 2) is less than the magnitude of the accumulated dispersion of the second dispersion compensation fibres (26; 28) which are fitted at the end, and **in that** the first dispersion compensation fibre (25; 27) which is fitted to the start of each path section (1; 2) is connected directly to the optical fibre (29; 30) in the path section (1; 2).

2. Optical transmission system according to Claim 1, **characterized in that** a signal amplifier (21; 23) is provided between the second dispersion compensation fibre (26; 28), which is fitted to the end of each path section (1; 2), and the optical fibre (29; 30) which forms the path section (1; 2).

3. Optical transmission system according to Claim 1 or 2, **characterized in that** the optical transmission system is formed by single-channel transmission paths.

4. Optical transmission system according to Claim 1 or 2, **characterized in that** the optical transmission system is formed by multiple-channel transmission paths.

5. Optical transmission system according to one of Claims 1 to 4, **characterized in that** the optical transmission system forms point-to-point links.

6. Optical transmission system according to one of Claims 1 to 4, **characterized in that** the optical transmission system is used in optical networks.

7. Optical transmission system according to one of Claims 1 to 6, **characterized in that** fibre gratings are provided instead of dispersion compensation fibres (20, 26; 27, 28).

8. Method in order to compensate for dispersion in optical transmission paths, which comprise one or more path sections that are formed from optical fibres in which dispersion compensation fibres are used, with a first dispersion compensation fibre being arranged at the start of each path section and a second dispersion compensation fibre being arranged at the end of each path section, and the total accumulated dispersion of the first and second dispersion compensation fibres compensating for the accumulated dispersion of the optical fibres which occurs in each path section, **characterized in that** the accumulated dispersion of the first dispersion compensation fibres is defined such that its magnitude is less than the accumulated dispersion of the second dispersion compensation fibres, with the split between the first and second dispersion compensation fibres being carried out such that high optical power levels are limited to areas of low accumulated dispersion, and **in that** the first dispersion compensation fibre is connected directly to the optical fibre in the path section.

9. Method according to Claim 8, **characterized in that** fibre gratings are used instead of dispersion compensation fibres (25, 26; 27, 28).

## Revendications

1. Système de transmission optique comprenant une ou plusieurs sections de ligne (1 ; 2) avec des fibres de compensation de la dispersion (25, 26 ; 27, 28), avec lequel une première fibre de compensation de la dispersion (25 ; 27) est montée au début et une deuxième fibre de compensation de la dispersion (26 ; 28) à la fin de chaque section de ligne, la dispersion cumulée totale de la première (25 ; 27) et de la deuxième fibre de compensation de la dispersion (26 ; 28) d'une section de ligne (1 ; 2) correspondant au niveau de son montant à la dispersion cumulée d'une fibre optique (29 ; 30) formant la section de ligne (1 ; 2), **caractérisé en ce que** la dispersion cumulée de la première fibre de compensation de la dispersion (25 ; 27) montée au début de la fibre optique (29 ; 30) de chaque section de ligne (1 ; 2) est inférieure au niveau de son montant à la dispersion cumulée de la deuxième fibre de compensation de la dispersion (26 ; 28) montée à la fin et que la première fibre de compensation de la dispersion (25 ; 27) montée au début de chaque section de ligne (1 ; 2) est reliée directement à la fibre optique (29 ; 30) de la section de ligne (1 ; 2).

2. Système de transmission optique selon la revendication 1, **caractérisé en ce qu'**un amplificateur de signal (21 ; 23) est prévu entre la deuxième fibre de compensation de la dispersion (26 ; 28) montée à la fin de chaque section de ligne (1 ; 2) et la fibre optique (29 ; 30) qui forme la section de ligne (1 ; 2).

3. Système de transmission optique selon la revendication 1 ou 2, **caractérisé en ce que** le système de transmission optique est formé par des lignes de transmission à un canal.

4. Système de transmission optique selon la revendication 1 ou 2, **caractérisé en ce que** le système de transmission optique est formé par des lignes de transmission à plusieurs canaux.

5. Système de transmission optique selon l'une des revendications 1 à 4, **caractérisé en ce que** le système de transmission optique forme des liaisons point à point.

6. Système de transmission optique selon l'une des revendications 1 à 4, **caractérisé en ce que** le système de transmission optique est utilisé dans des réseaux optiques.

7. Système de transmission optique selon l'une des revendications 1 à 6, **caractérisé en ce que** des réseaux de fibres sont prévus à la place des fibres de compensation de la dispersion (20, 26 ; 27, 28).

8. Procédé de compensation de la dispersion dans les lignes de transmission optique, qui se composent d'une ou de plusieurs sections de ligne formées par des fibres optiques, avec lequel sont utilisées des fibres de compensation de la dispersion, une première fibre de compensation de la dispersion étant montée au début et une deuxième fibre de compensation de la dispersion à la fin de chaque section de ligne et la dispersion cumulée totale de la première et de la deuxième fibre de compensation de la dispersion compense la dispersion cumulée de la fibre optique formant dans chaque section de ligne, **caractérisé en ce que** la dispersion cumulée de la première fibre de compensation de la dispersion est déterminée de telle sorte que son montant est inférieur à la dispersion cumulée de la deuxième fibre de compensation de la dispersion, la répartition entre la première et la deuxième fibre de compensation de la dispersion étant effectuée de telle sorte que les puissances optiques élevées sont limitées à des plages de faible dispersion cumulée et que la première fibre de compensation de la dispersion est reliée directement à la fibre optique de la section de ligne.

9. Procédé selon la revendication 8, **caractérisé en ce que** des réseaux de fibres sont utilisés à la place des fibres de compensation de la dispersion (25, 26 ; 27, 28).
